# EUROPEAN PATENT APPLICATION

(11) **EP 0 692 661 A1**
(43) Date of publication of application: **17.01.1996**
(21) Application number: 94202071.0
(22) Date of filing: 15.07.1994
(51) Int. Cl.: F16K 1/226, F02D 9/06, F16C 33/74, F16K 41/02

(54) **High temperature fluid control valve device**

(71) Applicant: FUJI OOZX INC., Fujisawa-shi, Kanagawa-ken (JP)
(72) Inventor: Ohtsubo Kizuku, Fujisawa-shi, Kanagawa-ken (JP); Kawano, Kazuo, Fujisawa-shi, Kanagawa-ken, (JP)
(74) Representative: Oulton, Richard John

(57) **Abstract**

A valve disc (4) has a valve shaft (14) perpendicular to a fluid passage. The valve shaft (14) is rotatably supported by a bearing member (6) in a bore (5) of the side wall of a body of a valve device. Seal rings (9,10) are provided in the bore (5) and a retainer (15) is provided for limiting axial movement of the seal rings (9,10). The retainer (15) is pressingly fitted in the bore (5) so that a gap is formed between the retainer (15) and the valve shaft (14) or between the retainer (15) and the inner circumferential surface of the bore (5), thereby minimizing leakage of the fluid and preventing strength of the valve shaft (14) from decreasing.

## Description

### BACKGROUND OF THE INVENTION

This invention relates to a high temperature fluid control valve device and in particular to a high temperature gas control valve device for exhaust gas brake in which for example, exhaust passage in an engine is opened and closed to obtain braking force.

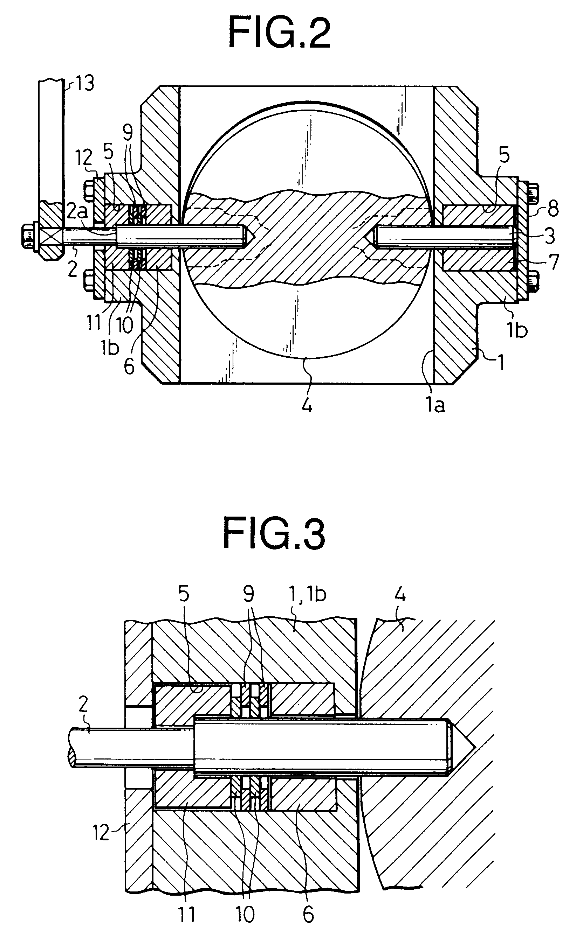

Fig. 2 illustrates a butterfly valve device conventionally used to control a high temperature gas, in which a substantially cylindrical sectioned body 1 has a passage 1a in which a butterfly valve disc 4 is rotatably supported by a pair of valve shafts 2 and 3 perpendicular to a passage 1a. There are formed bores 5 which communicate with the passage 1a in thickened portions 1b at the side walls of the body 1. The pair of valve shafts 2 and 3 are rotatably supported by a shorter bush (bearing) 6 which is inserted in the left bore 5 and a longer bush 7 which is inserted in the right bore 5.

The outer opening end of the right bore 5 is closed by a closing plate 8. In the middle of the left bore 5, two larger diameter seal rings 9 which are engaged on the inner surface of the bore 5 are alternately arranged with smaller diameter seal rings 10 which are engaged on the outer surface of the valve shaft 2. In the bore 5, adjacent to the seal ring 10, a tubular retainer 11 is movably fitted, and an inner stepped portion is engaged with a smaller diameter stepped portion 2a, thereby limiting rightward movement of the retainer 11. The retainer 11 is prevented from disengaging by a holding plate 12 bolted on the opening end of the bore 5.

The seal rings 9 and 10 are positioned between the bush 6 and retainer 11, thereby preventing axial movement thereof. The valve disc 4 is opened and closed by rotating the drive valve shaft 2 which passes through the bore 5 of the body 11 and projects leftward, by a drive lever 13 fixed to the end of the valve shaft 2.

In the conventional butterfly valve device, to prevent high temperature and pressure exhaust gas in the passage 1a from leakage through the penetrated portion of the body 1 of the driving valve shaft 2, the plurality of the seal rings 9 and 10 are fitted in the bore 5, but sealing capability is insufficient in the device. That is to say, as shown in Fig. 3, the retainer 11 is movably fitted in the bore 5. Thus, relatively large gaps are formed both between the inner circumferential surface of the retainer 11 and the outer circumferential surface of the valve shaft 2 and between the outer circumferential surface of the retainer 11 and the inner circumferential surface of the bore 5. Exhaust gas which passes through gaps between the seal rings 9 and 10 and the valve shaft 2 and the bore 5 is easily invaded into the gaps, thereby increasing leakage to the outside and oxidizing the contact surface, so that smooth rotation of the valve shaft 2 is not carried out.

In the conventional device, to position the retainer 5 axially, the valve shaft 2 is formed as smaller diameter outwards from the middle portion, and the smaller diameter stepped portion 2a is engaged with the stepped portion of the retainer 5, thereby increasing the number of processing steps of the valve shaft 5 and the retainer 11 and decreasing strength of the valve shaft 2.

### SUMMARY OF THE INVENTION

In view of the disadvantages involved in the conventional device, it is an object of the present invention to provide a high temperature fluid control valve device in which leakage of exhaust fluid is made at minimum not to decrease strength of a valve shaft.
s To achieve the object, according to the present invention, there is provided A high temperature fluid control valve device, which comprises a body; a valve disc in the body; a valve shaft perpendicular to a fluid passage and connected to the valve disc; a bore in which the valve shaft is inserted at a side wall of the body; a bearing member for rotatably supporting the valve shaft in the bore; a sealing member adjacent to the bearing member in the bore; and a retainer adjacent to the sealing member for limiting axial movement of the seal member, the retainer being pressingly fitted in the bore or on the vertical shaft such that a gap is formed between the inner circumferential surface of the retainer and the outer circuferential surface of the valve shaft or between the outer circumferential surface of the retainer and the inner circumferential surface of the bore.

The retainer is pressingly fitted either on the valve shaft and in the bore, thereby decreasing the gap to a half and minimizing leakage of fluid to the outside.

A outer flange may be formed at the outer end of the retainer to position the retainer axially, thereby omitting necessity of making the valve shaft to a smaller diameter and preventing strength of the shaft from decreasing.

### BRIEF DESCRIPTION OF THE DRAWINGS

The features and advantages of the present invention will become more apparent on the basis of the following description with respect to appended drawings wherein:
Fig. 1 is an enlarged transverse sectioned plan view which shows one embodiment of the present invention;
Fig. 2 is a transverse sectioned plan view of a conventional valve device; and
Fig. 3 is an enlarged transverse sectioned plan view of main portion of the device in Fig. 2.

### DETAILED DESCRIPTION OF PREFERRED EMBODIMENT

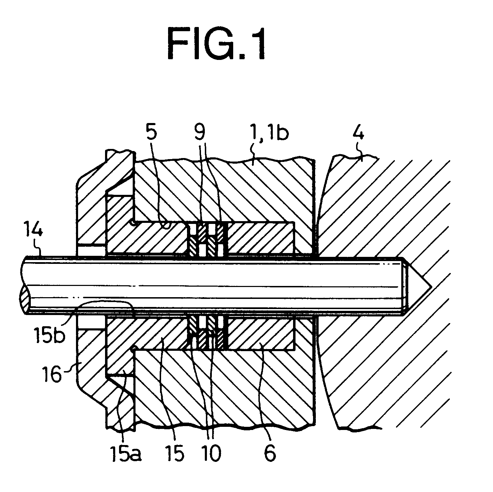

Fig. 1 shows one embodiment of the present invention in which the same numerals are allotted to the same members as those in Figs. 2 and 3 which illustrate a conventional valve device. In a bore 5 of a thickened portion 1b at the left side wall of a body 1, there are a bush 6 and two larger and smaller seal rings 9 and 10. A driving valve shaft 14 is cylindrical and is rotatably supported by the bush 6. At the left of the seal rings 9 and 10 in the bore 5, there is provided a retainer 15 having a larger diameter flange 15a at the left end and an axial bore 15b, the end of the retainer 15 being engaged with or close to the seal ring 10. The retainer 15 is positioned wih respect to the seal ring 10 by engaging the end of the flange 15a with an opening end of the bore 5. The numeral 16 denotes a closing plate for covering the end of the retainer 15.

As described above, in the foregoing embodiment, the retainer 15 is pressingly fitted into the bore 5 to make no gap between the outer circumferential surface of the retainer 15 and the inner circumferential surface of the bore 5, but only provide a gap between the outer circumferential surface of the valve shaft 14 and the inner circumferential surface of the bore 15b of the retainer 15, thereby minimizing leakage of exhaust gas which passes through the seal rings 9 and 10 to the outside. Thus, it is prevented that the retainer 15, the bore 5 and the valve shaft 14 is oxidized by high temperature exhaust gas, thereby avoiding disadvantage that the valve shaft 14 is unsmoothly rotated, and increasing durability.

The retainer 15 is axially positioned by the flange 15a, thereby avoiding necessity that the valve shaft 14 has smaller diameter partially. Thus, the valve shaft 14 and the retainer 15 are easily processed and strength of the valve shaft 14 is not decreased.

In this embodiment, the retainer 15 is pressingly fitted into the bore 5, but may be pressingly fitted on the valve shaft 14. In this case, the flange 15a of the retainer 15 may be omitted, and the retainer is cylindrically formed.

The foregoing merely relates to an embodiment of the invention, but various modifications and changes may be made by persons skilled in the art without departing from the scope of claims wherein:

## Claims

1. A high temperature fluid control valve device, which comprises:
a body;
a valve disc in the body;
a valve shaft perpendicular to a fluid passage and connected to the valve disc;
a bore in which the valve shaft is inserted at a side wall of the body;
a bearing member for rotatably supporting the valve shaft in the bore;
a sealing member adjacent to the bearing member in the bore; and
a retainer adjacent to the sealing member for limiting axial movement of the seal member, the retainer being pressingly fitted in the bore or on the vertical shaft such that a gap is formed between the inner circumferential surface of the retainer and the outer circuferential surface of the valve shaft or between the outer circumferential surface of the retainer and the inner circumferential surface of the bore.

2. A device as defined in claim 1 wherein at an end of the retainer there is formed an outer flange which contacts an opening end of the bore.
